# EUROPÄISCHE PATENTANMELDUNG

(11) **EP 1 972 565 A1**
(43) Veröffentlichungstag der Anmeldung: **24.09.2008**
(21) Anmeldenummer: 07005576.9
(22) Anmeldetag: 19.03.2007
(51) Int. Cl.: B65D 5/42, B65D 25/20, G06K 19/077

(54) **Verpackung**

(71) Anmelder: Mondi Technology Investments SA, 1255 Luxembourg (LU)
(72) Erfinder: Beglari, Reza, 1180 Wien (AT); Clarke, Mike, 1190 Wien (AT); Crawford, Mark, Swadlincote Derbyshire DE11 9PA (GB)
(74) Vertreter: Landgraf, Elvira

(57) **Zusammenfassung**

Die Erfindung betrifft einen Behälter (1) oder eine Verpackung, bestehend aus Wellpappe, Papier oder Kunststoff, der eine Vorrichtung (4,5,6) zum Senden, Empfangen und Speichern von Informationen zur Nachverfolgung und Identifikation des Behälters aufweist, dadurch gekennzeichnet, dass die Vorrichtung zum Senden, Empfangen und Speichern von Informationen an einer Verklebungsstelle (2) oder an einer anderen definierten Stelle des Behälters vorgesehen ist.

## Beschreibung

Die Erfindung betrifft eine Verpackung, insbesondere eine Faltschachtel aus Wellpappe oder eine Verpackung aus Papier, Karton Textilien oder Verbunden mit Kunststoff, die ein Mittel zur Nachverfolgung und Identifikation der Verpackung aufweist, sowie ein Verfahren zur Herstellung der Verpackung.

Heute werden beim Einsatz von RFID-Technologie in Logistikketten RFID-Etiketten noch größtenteils von den Kunden der Verpackungsindustrie selbst und oft manuell auf Verpackungen aufgebracht.
Es herrscht jedoch allgemein Konsens darüber, dass die gegenwärtigen Methoden bei einem Einsatz von RFID-Technologie in größerem Umfang nicht einsetzbar sind. Es wird davon ausgegangen, dass der Markt von der Verpackungsindustrie verlangen wird, Verpackungen oder Verpackungsmaterialien im Rahmen der Verpackungsherstellung mit RFID-Transpondern auszustatten.
Zum gegenwärtigen Zeitpunkt gibt es keine kommerziell erhältlichen Systeme um Verpackungen oder Verpackungsmaterialien inline mit RFID-Transponders auszustatten.
Vereinzelt kommen einfache offline Systeme zur Applikation von Barcode Etiketten zum Einsatz. Andererseits gibt es RFID-Systeme die sich integrieren und automatisieren lassen, jedoch zu langsam sind und sich nicht für den Einsatz unter Bedingungen wie sie in der Verpackungsindustrie herrschen eignen, da sie nicht ausreichend gegen Staub geschützt sind und sich nicht in bestehende Verpackungsherstellungsmaschinen integrieren lassen.

Aus der EP 861 788 B ist ein Behälter bekannt, der an einer Fläche eines seiner Teile eine Eindrückung oder Vertiefung aufweist, die einen interaktiven Elektronikchip aufnehmen kann.
Die Vertiefung wird durch Druck oder Stauchung des Wellkartons erzeugt.

Gegenstand der Erfindung ist daher ein Behälter oder eine Verpackung oder ein Verpackungsmaterial, bestehend aus Wellpappe, Papier, Karton, Textil oder Verbunden mit Kunststoff der eine Vorrichtung zum Senden, Empfangen und Speichern von Informationen zur Nachverfolgung und Identifikation des Behälters aufweist, dadurch gekennzeichnet dass, die Vorrichtung zum Senden, Empfangen und Speichern von Informationen an einer Verklebungsstelle oder an einer anderen definierten Stelle des Behälter situiert ist.

Ein weiterer Gegenstand der Erfindung ist ein Verfahren zur Herstellung eines Behälters oder einer Verpackung, gekennzeichnet durch folgende Verfahrensschritte
A) Bereitstellen eines RFID- Transponders
B) Überprüfen des Transponders und ausscheiden defekter Transponders
C) Versehen des Transponders mit den gewünschten Daten
D) Überprüfen des Transponders und Ausscheiden defekter oder unlesbarer Transponders
E) Aufbringen des Transponders gegebenenfalls vor, nach oder gleichzeitig mit der Aufbringung eines Klebemittels
F) Registrieren des Transponders und Assoziieren mit den Produktdaten oder den Produktionsdaten
G) Verifizierung der Daten des Transponders und Ausscheiden defekter Produkte (Behälter oder Verpackungen)
H) Assoziieren der Daten des Transponders mit weiteren Produktionsdaten
I) Ausscheiden defekter Produkte.

Die Verfahrensschritte A und C und/oder E und F können vertauscht durchgeführt werden.

Unter Verpackung werden hier Verpackungen beispielsweise Schachteln, Faltschachteln, ein- oder mehrlagige Säcke und dergleichen aus Papier, Karton, Wellpappe, Textilien oder Verbunden mit Kunststoff verstanden. Dabei kann eine Verpackung aus einem einzelnen oder einer Kombination aus mehreren der genannten Materialen bestehen. Die Materialien können beschichtet, lackiert oder oberflächenbehandelt sein.

Durch die erfindungsgemäße Situierung an einer Verklebungsstelle des Behälters oder an einer anderen definierten Stelle ist die Vorrichtung zum Senden, Empfangen und Speichern von Informationen an einer definierten Stelle fixiert.

Im Besonderen wird an der definierten Stelle ein RFID Transponder eingebracht.

Der Transponder kann von einer Rolle oder in vereinzelter Form bereitgestellt werden.

Unter Transponder werden hier Tags, Labels oder Inlays verstanden.

Der Transponder besteht aus einem Trägersubstrat, vorzugsweise einer Kunststofffolie, beispielsweise einer Polyesterfolie, einer Polypropylenfolie oder Papier oder dergleichen.
Auf dieses Trägersubstrat sind metallische Beschichtungen, beispielsweise aus Cu oder Al aufgebracht, die die Antenne bilden. Ferner kann die Antenne auch durch Drucken leitfähiger Farben oder Lacke oder leitfähiger Kunststoffe oder Polymere hergestellt werden.

Der Chip wird in weiterer Folge aufgebracht, beispielsweise mit der sog. Flip Chip Technik, bei der Silizium Chips einzeln an einer exakt bestimmte Stelle auf das Trägersubstrat aufgebracht und mit der Antenne verbunden werden.

Aus Trägersubstrat, Antenne und Silizium Chip entsteht so ein sogenanntes Inlay, das einen voll funktionstüchtigen Transponder verkörpert.

Eine weiteres Verfahren zur Herstellung von Inlays stellt das Drucken von ganzen integrierten Schaltungen dar. Dabei werden in der Regel organische Verbindungen verwendet um Antennen und die Integrierte Schaltung selbst zu drucken. Auch hier entsteht in einem ersten Schritt ein Inlay, das in diesem Fall aber keinen Silizium Chip besitzt.

Es kann aber auch jedes andere bekannte Verfahren zur Aufbringung der Chips angewendet werden.
Auf dem Chip können relevante Daten, wie Herkunft und Art des Produkts, Herstellungsdatum, Verpackungsdatum und/oder weitere produkttechnische und vom Kunden oder Verbraucher gewünschte Daten gespeichert werden.

Dieses RFID Inlay kann dann in einem weiteren Konvertierungsschritt zu einem RFID Tag unterschiedlicher Ausprägung verarbeitet werden. Ein Tag kann, wie in der Folge beschrieben, mit Selbstklebe- und eventuell anderen Beschichtungen versehen in ein selbstklebendes Etikett konvertiert werden oder auch mit bekannten Schutzschichten versehen werden, um das Inlay gegen mechanische, elektromagnetische oder auch andere physikalische oder chemische Umwelteinflüsse zu schützen und die erforderliche Stabilität zu gewährleisten.

Entsprechend des Herstellungsverfahrens von Selbstklebeetiketten unterscheidet man zwischen einem einfachen RFID Inlay (dem sog. "Dry Inlay" bestehend aus Trägersubstrat Antenne und Chip)), einem an einer Oberfläche mit einer Selbstklebebeschichtung versehenen RFID Inlay (dem sog. "Wet Inlay") und einem herkömmlichen Selbstklebeetikett, das auf einer Seite mit einer Selbstklebebeschichtung und auf der gegenüberliegenden Seite meist mit einer weiteren Beschichtung aus Papier oder Kunststoff versehen ist.

Das in weiterer Folge beschriebene Verfahren ist für das Aufbringen von "Wet Inlays" und Selbstklebeetiketten in Rollenform geeignet. Es eignet sich dabei gleichermaßen für herkömmliche Inlays und Etiketten mit Silizium Chips wie auch für Inlays und Etiketten, die durch Druckverfahren mit z.B. organischen Substanzen (sog. Printed Electronics) hergestellt werden.

Nimmt man das Trägersubstrat als Referenzschicht so sieht der Aufbau folgendermaßen aus:
Auf die Oberseite des Trägersubstrats wird die Antenne und darauf der Chip aufgebracht. Darauf wird eine Selbstklebebeschichtung aufgebracht. Darauf wiederum wird eine Papierschicht aufgebracht. Diese dient zum Schutz des Transponders. Außerdem ermöglicht diese Schicht erst den Einsatz in der Verklebungsstelle.

An der Unterseite des Trägersubstrats kann ebenfalls eine selbstklebende Beschichtung aufgebracht werden. Damit erhält der Transponder die Ausprägung eines Selbstklebeetiketts.

Der oben beschriebene Aufbau des Transponders ermöglicht insbesondere eine spezielle Anwendung; die "echte" Verklebung in einer Verklebungsstelle. Dabei wird der Transponder direkt in der Klebestelle der Verpackung verklebt. Es ist aber auch möglich den Transponder auf einer anderen definierten Stelle aufzubringen.

Unter verkleben werden hier Verklebungstechniken verstanden, die ihre Klebewirkung durch das Auftragen von Leimen oder anderen Substanzen zum Kleben erzielen, aber auch andere Klebe- oder Schweiß-Verfahren bei denen die Verklebungswirkung durch Hitze, mechanischen Druck, elektromagnetische Einwirkung oder eine chemische Reaktion eine Klebewirkung erzielt wird.

Im Gegensatz zu einer "echten" Verklebung, bei der der Transponder teilweise oder vollständig in der Verklebungs- oder Schweißstelle eingebracht wird, ermöglicht das beschriebene Verfahren auch eine "unechte" Verklebung, bei der es an Stellen rund um den Transponder zu einer teilweisen oder vollständigen Verklebung kommt, wodurch der Transponder zwar zwischen zwei Lagen des Verpackungsmaterials oder Materialverbundes eingebettet aber nicht "echt" verklebt ist.

Der RFID-Transponder wird erfindungsgemäß inline während des Herstellungsprozesses der Verpackungen bzw. Behälter eingebracht.

Zur Aufbringung des Transponders wird ein gegebenenfalls beschriebener RFID-Transponder von einer Rolle oder in vereinzelter Form bereitgestellt und überprüft.
Defekte Transponders werden im Anschluss daran ausgeschieden. Anschließend wird der Transponder, falls er noch nicht mit den gewünschten Informationen versehen ist, beschrieben bzw. bedruckt und wiederum überprüft, wobei defekter Transponder wieder ausgeschieden werden.

Anschließend erfolgt die Aufbringung des Transponders. Dies kann entweder vor, nach oder gleichzeitig einer allfälligen Aufbringung des Leims erfolgen.

Die Aufbringung des RFID-Transponders kann auf die Verklebungsstelle selbst erfolgen.

Die Aufbringung des Etiketts kann inline aber auch auf das Gegenstück zur Verklebungsstelle erfolgen.

In diesem Fall wird der Transponder auf die Gegenstelle der gegebenenfalls mit Leim versehenen Verpackungsstelle aufgebracht. In diesem Fall kann der Transponder vor oder nach oder gleichzeitig mit dem Aufbringen des Leims aufgebracht werden.

Für die oben beschriebenen Verfahren muss für bestimmte Anwendungsfälle ein auf einem Papiersubstrat basierender Transponder oder eben ein mit einer zusätzlichen Papierschicht versehener Transponder verwendet werden, da es ansonsten zu keiner ausreichenden Haftwirkung zwischen der Oberfläche des Transponders und des Leims kommt und dadurch die Verklebung der Verpackung mangelhaft ist.

Grundsätzlich muss der Transponder nicht unbedingt direkt verklebt werden. Bei einem Transponder entsprechend kleiner Größe oder einer großen Verklebungsstelle kann der Transponder zwar in der Verklebungsstelle selbst aufgebracht sein aber nicht direkt verklebt sein.

In diesem Fall kann auf die oberste Papierschicht des Transponders verzichtet werden. Damit ließen sich die Kosten des Transponders reduzieren. Auf der anderen Seite erfüllt die zusätzliche Papierschicht auch eine Schutzfunktion gegen mechanische und in gewissem Ausmaß auch elektromagnetische Einwirkungen.

Anschließend erfolgt die Registrierung des Transponders in einer Datenbank und die Assoziierung mit Produkt- und Produktionsdaten. Es erfolgt also eine Verknüpfung der Identifikationsnummer des Transponders mit den Produktionsdaten. Ferner wird der nun im Produkt eingebrachte Transponder wieder überprüft und defekte Produkte sofort ausgeschieden.

Im Verlauf der weiteren Herstellung der Verpackung wird nach dem nächsten Verfahrensschritt (z.B.: Falten, Stapeln etc.) der Transponder mit weiteren produktionsspezifischen Daten versehen und wiederum überprüft, wobei defekte Transponders bzw. die mit defekten Transponders versehenen Produkte ausgeschieden werden.

Das beschriebene Verfahren lässt also eine in-line Aufbringung des Transponders auf jeder beliebigen Stelle der Verpackung zu. Im Gegensatz zu üblichen Anwendungen kann das Verfahren in bestehende Verpackungsherstellungsprozesse integriert werden. Die Aufbringung der Transponder ist nur an ganz bestimmten Stellen des Verpackungsherstellungsprozesses möglich.

Das beschriebene Verfahren erlaubt das Inline-Bedrucken von Etiketten vor der Aufbringung auf die Verpackung. In diesem Fall würde das Etikett in der Regel nicht im Bereich der Verklebungsstelle aufgebracht werden.

Eine weitere Funktion des Verfahrens ist die integrierte Funktionsüberprüfung der Transponder und die Markierung fehlerhafter Verpackungen oder Verpackungsmaterialien, die ein manuelles oder automatisches Ausscheiden von nicht funktionstüchtigen Verpackungen ermöglicht. Transponder können vor der Aufbringung aber auch nach der Aufbringung im Zuge des Verpackungsherstellungsprozesses überprüft und Transponder (vor der Aufbringung) oder eben Verpackungen (nach der Aufbringung) aus dem Prozess ausgeschieden werden.

Ein wesentliches Merkmal des beschriebenen Verfahrens ist die Verknüpfung der Identifikationsnummer von Transpondern mit Produktionsdaten bevor die Verpackung die Maschine verlässt. Diese Verknüpfung ist untrennbar gestaltet und kann somit nicht im Nachhinein (sondern nur im laufenden Produktionsprozess) auf den Transponder geschrieben werden. Diese Funktion spielt eine wesentliche Rolle beim Einsatz von mit Transpondern versehenen Verpackungen zum Authentifizieren von darin verpackten Produkten. Aufgrund der beschriebenen Verschränkung von Chip Identifikationsnummer mit Produktionsparametem lässt sich die Authentizität der Verpackung bestimmen. Daraus kann man zumindest einen Schluss auf die Authentizität der darin verpackten Produkte ziehen.

In der Verpackungsherstellungsindustrie lässt sich oben beschriebenes Verfahren ohne Einschränkung auf alle gängigen Verpackungsmaschinen wie Klebemaschinen, Druckmaschinen, Stanzmaschinen, bei der Herstellung von Säcken, Industriebeuteln, Bodenbeuteln, Standbeuteln und dergleichen anwenden.

Die so erfindungsgemäße Verpackung bzw. der erfindungsgemäße Behälter ermöglicht eine Vielzahl an Einsatzmöglichkeiten die allesamt auf der Eigenschaft von RFID-Transpondern eine Automatisierung von Datenerfassungsprozessen zu ermöglichen beruhen.

Damit können existierende Prozesse effizienter gestaltet werden vor allem manuelle und damit arbeitsintensive Datenerfassungsprozesse wie das händische Scannen von Strichcodes auf einer großen Anzahl von Kartons auf einer Palette könnten zum Beispiel vollständig automatisiert werden. RFID ermöglicht in vielen Fällen aber auch erst die Einführung von neuen oder zusätzlichen Datenerfassungspunkten um die Granularität der Nachverfolgbarkeit von Objektbewegungen zu verbessern. Letzteres spielt vor allem bei der Nachverfolgbarkeit von Warenflüssen in Logistikketten eine vorherrschende Rolle.

Die Markenschutz-Industrie macht sich die Eigenschaften von RFID - Transpondern zu Nutze, dass die in einem RIFD Chip gespeicherte Identifikationsnummer weltweit einzigartig und fälschungssicher ist, insbesondere da sich nicht nur das Produkt durch den RFID Chip eindeutig identifizieren lässt, sondern auch dass Informationen über die Herkunft und den Weg durch die Logistikkette mit der Identifikationsnummer verbunden werden können.

Die folgenden konkreten Anwendungen können durch mit RFID Transpondern versehene Verpackungen oder Verpackungsmaterialien aus Papier, Karton, Wellpappe, Textilien oder Verbunden mit Kunststoffen ermöglicht werden:
- die eindeutige Identifikation der Verpackung (und damit auch des korrekten Inhalts) durch die individualiserten auf dem RFID-Transponder gespeicherten Daten.
- die automatische Erfassung von Warenbewegungen in einem Warenlager anhand der Erkennung von an Kartons angebrachten RFID Transpondern. Damit können Diskrepanzen zwischen dem eigentlichen Lagerstand und der im Lagerverwaltungssystem erfassten Information praktisch eliminiert werden. Außerdem wird dadurch eine präzise Aussage darüber möglich, welche und wie viele Produkte sich im Warenlager befinden und welche und wie viele Produkte sich daher im Verkaufsraum befinden.
- Implizit führt der Einsatz solcher Systeme in der Regel auch zu einer erheblichen Reduktion von Schwund.
- Der RFID-Transponder auf Verpackungen ermöglicht aber generell eine genauere Nachverfolgung von Produkten in der Logistikkette, insbesondere dort wo aufgrund der manuellen Prozesse eine Erfassung der Warenflüsse nur an neuralgischen Punkten durchgeführt wurde. Von besonderem Interesse ist dies für Paketdienste.
- Darüber hinaus lassen sich auch andere Prozesse wie die Erstellung von Lieferscheinen etc. automatisieren.

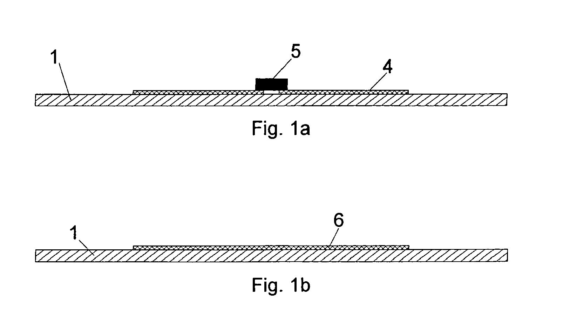

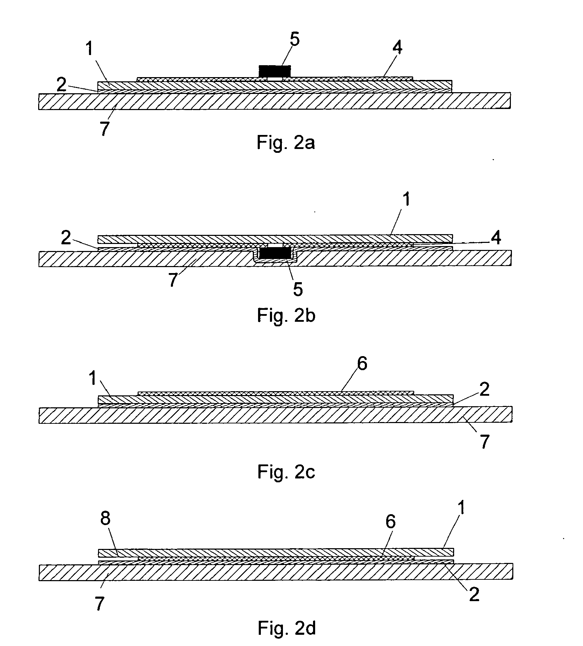

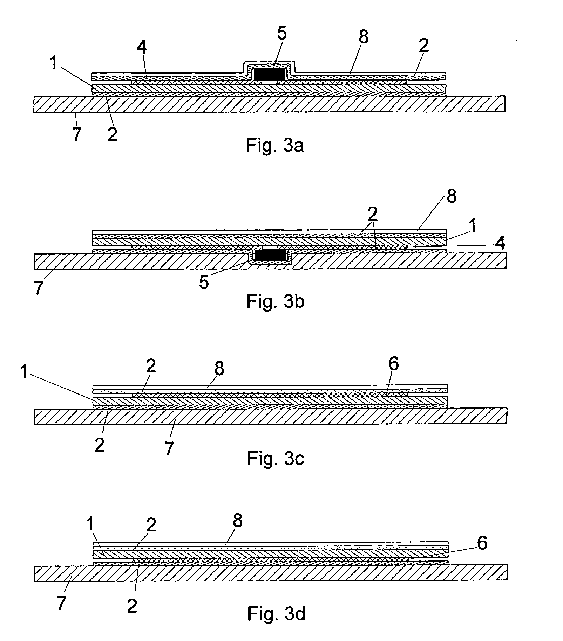

In den Figuren 1 bis 3 sind mögliche Aufbauten des RFID- Transponders dargestellt.

In Fig.1 sind "Dry Inlays" dargestellt, in Fig, 2 "Wet Inlays" und in Fig. 3 Transponder (Tags) dargestellt.

Darin bedeuten 1 das Trägersubstrat, 2 eine Selbstklebeschicht, 4 die Antenne, 5 den Chip, 6 einen gedruckten IC, 7 eine Releaseschicht, 8 die Abdeckschicht, die aus Papier oder Kunststoff bestehen kann.

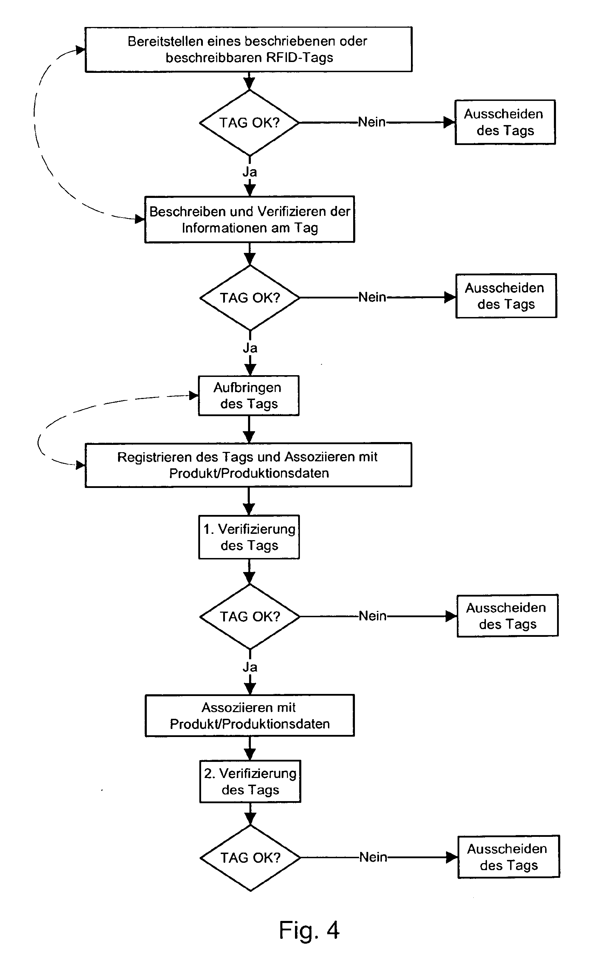

In Fig. 4 ist der Verfahrensablauf zur Herstellung der mit dem RFID-Transponder versehenen Produkte dargestellt.

## Patentansprüche

1. Ein Behälter oder eine Verpackung oder ein Verpackungsmaterial, bestehend aus Papier, Karton, Wellpappe, Textilien oder Verbunden mit Kunststoff, der eine Vorrichtung zum Senden, Empfangen und Speichern von Informationen zur Nachverfolgung und Identifikation des Behälters aufweist, **dadurch gekennzeichnet, dass** die Vorrichtung zum Senden, Empfangen und Speichern von Informationen an einer Verklebungsstelle oder an einer anderen definierten Stelle des Behälters situiert ist.

2. Behälter oder Verpackung nach Anspruch 1, **dadurch gekennzeichnet, dass** die Vorrichtung zum Senden, Empfangen und Speichern von Informationen zur Nachverfolgung und Identifikation des Behälters in einer Verklebungsstelle des Behälters situiert ist.

3. Behälter oder Verpackung nach Anspruch 1 oder 2, **dadurch gekennzeichnet, dass** die Vorrichtung zum Senden, Empfangen und Speichern von Informationen zur Nachverfolgung und Identifikation des Behälters ein RFID-Transponder ist, wobei die Daten des Transponders mit den Produkt- und/oder Produktionsdaten unlösbar miteinander verschränkt sind.

4. Behälter oder Verpackung nach einem der Ansprüche 1 bis 3, **dadurch gekennzeichnet, dass** der RFID-Transponder relevante Daten, wie Herkunft und Art des Produkts, Herstellungsdatum, Verpackungsdatum und/oder weitere produkttechnische oder vom Kunden oder Verbraucher gewünschte Daten gespeichert sind.

5. Verfahren zur Herstellung eines Behälters oder einer Verpackung nach einem der Ansprüche 1 bis 4 , **gekennzeichnet durch** folgende Verfahrensschritte
a. Bereitstellen eines RFID- Transponders
b. Überprüfen des Transponders und ausscheiden defekter Transponders
c. Versehen des Transponders mit den gewünschten Daten
d. Überprüfen des Transponders und Ausscheiden defekter oder unlesbarer Transponders
e. Aufbringen des Transponders gegebenenfalls vor, nach oder gleichzeitig mit der Aufbringung eines Klebemittels
f. Registrieren des Transponders (Assoziieren mit den Produktdaten oder den Produktionsdaten)
g. Verifizierung der Daten des Transponders und Ausscheiden defekter Produkte (Behälter oder Verpackungen)
h. Assoziieren der Daten des Transponders mit weiteren Produktionsdaten
i. Ausscheiden defekter Produkte.

6. Verfahren nach Anspruch 5, **dadurch gekennzeichnet, dass** die Verfahrensschritte A und C und/oder E und F vertauscht sind.

7. Verfahren nach Anspruch 5 oder 6 **dadurch gekennzeichnet, dass** die Vorrichtung zum Senden, Empfangen und Speichern von Informationen inline auf die Verklebungsstelle vor der Aufbringung des Leims erfolgt.

8. Verfahren nach einem der Ansprüche 5 bis 7, **dadurch gekennzeichnet, dass** die Vorrichtung zum Senden, Empfangen und Speichern von Informationen inline auf das Gegenstück zur Verklebungsstelle erfolgt.

9. Verfahren zur Identifikation und Nachverfolgung von Verpackungen, **dadurch gekennzeichnet, dass** die Verpackungen an einer definierten Stelle mit einem RFID-Transponder, der mit relevanten Daten versehen ist, aufweist, wobei Bewegungen, Inhalt, Herkunft und weitere relevante Daten durch geeignete Lesegeräte und Erfassungsgeräte verfolgt und ausgelesen werden können.
